# FASCICULE DE BREVET EUROPEEN

(11) **EP 3 891 487 B1**
(45) Date de publication et mention de la délivrance du brevet: **09.08.2023**
(21) Numéro de dépôt: 19823802.4
(22) Date de dépôt: 19.11.2019
(51) Int. Cl.: G01M 15/02, G01M 15/04, G05B 17/02

(54) **BANC D'ESSAI POUR UN GROUPE MOTOPROPULSEUR HYBRIDE DE VEHICULE AUTOMOBILE**
PRÜFSTAND FÜR EINEN ANTRIEBSSTRANG EINES KRAFTFAHRZEUGES
TEST BENCH FOR A MOTOR VEHICLE HYBRID POWERTRAIN

(30) Priorité: 04.12.2018 FR 1872260
(43) Date de publication de la demande: 13.10.2021
(73) Titulaire: PSA Automobiles SA, 78300 Poissy (FR)
(72) Inventeur: TROPEE, Martin, 78260 Achères (FR); MORNET, Julien, 78480 Verneuil-sur-Seine (FR)
(86) Numéro de dépôt international: PCT/FR2019/052754
(87) Numéro de publication internationale: WO 2020/115387

(56) Documents cités:
- WO-A1-2013/022816
- FR-A1- 2 959 310

## Description

Le domaine de l'invention concerne un banc d'essai pour la simulation d'un cycle de conduite automobile et un procédé de pilotage du banc d'essai pour exécuter un tel cycle de conduite.

Dans l'industrie automobile, lors de la conception des véhicules à motorisation thermique ou motorisation hybride des tests sont menés pour évaluer la consommation de carburant, les émissions de gaz polluant et la production de CO₂. Dans ce but, les autorités de contrôle ont élaboré des procédures d'essais normalisées, WLTP en Europe pour « Worldwide Harmonized Light Véhiculés Test Procedures » en anglais et procédure FTP aux Etats-Unis pour « Fédéral Test Procedure ». Ces procédures définissent notamment des cycles de conduite permettant de simuler les performances des véhicules.

La modification et les exigences des nouvelles normes d'homologation en matière de pollution implique une augmentation du nombre d'essais à réaliser. En effet, ces essais ont pour objectif d'évaluer les performances en matière d'émission de gaz polluant mais aussi servent à calibrer les fonctions de dépollution d'un groupe motopropulseur.

Les cycles de conduite sont conçus de façon à représenter une utilisation du véhicule en zone urbaine, extra-urbaine, sur route et sur autoroute et définissent des courbes d'accélération et de vitesses et leurs durées spécifiquement à chaque utilisation pour des catégories de véhicules données.

Pour opérér les cycles de conduites et les mesures de performance, les constructeurs automobiles utilisent des bancs d'essai. On connait les documents FR2908886A1 et US20080022752A1 décrivant des bancs d'essai d'analyse de gaz d'échappement. Pour mettre en oeuvre les cycles de conduite, une solution consiste à sangler un véhicule sur un banc à rouleaux qui simule le couple résistant en fonction de la vitesse tandis qu'un opérateur conduit la voiture en accélération et freinage pour suivre un gabarit de vitesse. Cette première solution présente un coût élevé de mise en oeuvre de la simulation du fait de l'utilisation d'un véhicule et du personnel opérateur nécessaire à la conduite. Par ailleurs, les conditions de répétabilité d'un cycle à l'autre ne garantissent pas des résultats pouvant être comparés, en particulier lorsque les gains de performance à mesurer sont de faibles amplitudes et donc difficilement détectables si les cycles de conduites ne sont pas eux même parfaitement identiques.

Pour les procédures de test de consommation et d'émission de gaz d'échappement et en particulier pour les phases de calibration des fonctions de dépollution d'un groupe motopropulseur une autre solution consiste à simuler un cycle de conduite sur un banc d'essai reproduisant l'architecture fonctionnelle d'un groupe motopropulseur et son comportement. Cependant, cette solution présente également un coût important car l'installation requière le montage de l'ensemble de la chaine de traction dans une cabine où de nombreuses pièces d'adaptation sont réalisées sur mesure. De plus, dans le cas d'un véhicule hybride, le banc d'essai intègre les équipements électriques de puissance nécessaires au fonctionnement du module de traction électrique. Un exemple de banc d'essai pour l'étude d'un groupe motopropulseur d'un véhicule hybride est connu du document FR2959310A1. Or, installés en état de prototypage, ces équipements de puissances peuvent présenter un risque pour les opérateurs. Par conséquent, lors d'une opération de simulation d'un cycle de conduite on a généralement recours à un opérateur supplémentaire dédié à la surveillance des équipements électriques.

Il existe donc un besoin de palier les problèmes précités. Un objectif de l'invention est de proposer un banc d'essai à bas coût permettant de simuler des cycles de conduite normalisés destinés à l'évaluation des véhicules hybrides. Un autre objectif est de proposer un banc d'essai versatile permettant l'évaluation et la calibration des fonctions d'un groupe motopropulseur dans des phases précoces de la conception du véhicule.

Plus précisément, l'invention concerne un banc d'essai pour un groupe motopropulseur hybride de véhicule automobile comportant une première et une deuxième machine motrice destiné à la simulation d'un cycle de conduite. Selon l'invention le banc d'essai comporte uniquement la première machine motrice desdites première et deuxième machines motrices et des moyens de pilotage comportant un moyen de détermination d'une première consigne de couple de la première machine motrice équipant le banc d'essai, ladite première consigne étant calculée en fonction d'une deuxième consigne de couple virtuelle de la deuxième machine motrice et d'une troisième consigne de couple virtuelle de la première machine motrice, ladite troisième consigne étant calculée pour un modèle du véhicule comportant un groupe motopropulseur démuni de la deuxième machine motrice pour l'exécution dudit cycle de conduite, la première machine motrice pilotée par la première consigne étant un moteur thermique et en ce qu'il comporte en outre un moyen d'analyse des gaz d'échappement dudit moteur thermique.

Selon une variante, la première consigne de couple est calculée selon la relation suivante : C1= C3 - C2, où C1 est la valeur en couple de la première consigne, C3 est la valeur en couple de la troisième consigne virtuelle et C2 est la valeur en couple de la deuxième consigne virtuelle.

Selon une variante, le banc d'essai comporte en outre une génératrice, un moyen d'accouplement d'arbre rotatif et un actionneur pilotable de manière à accoupler sélectivement ladite machine motrice à la génératrice en fonction d'une quatrième consigne d'un couple transmissible.

Selon une variante, le moyen de détermination de la première consigne de couple met en oeuvre une cartographie prédéterminée définissant une fonction linéaire délivrant la première consigne de couple en fonction d'une consigne de position représentative d'un enfoncement d'une pédale d'accélérateur du véhicule.

Selon une variante préférentielle du premier mode de réalisation, le banc d'essai comporte en outre un moyen de refroidissement du moteur thermique et un moyen de régulation thermique du moyen de refroidissement pilotable en fonction d'un paramètre dudit cycle de conduite configuré de manière à être représentatif de l'action du flux d'air agissant en façade du véhicule lors du roulage du cycle de conduite.

L'invention concerne également un procédé de pilotage d'un banc d'essai conforme au mode de réalisation comprenant un moyen de refroidissement du moteur thermique, où le procédé consiste à piloter la première machine motrice équipant le banc d'essai en fonction de la première consigne de couple qui est dépendante d'une deuxième consigne de couple virtuelle de la deuxième machine motrice et d'une troisième consigne de couple virtuelle de la première machine motrice calculée pour un modèle du véhicule comportant un groupe motopropulseur démuni de la deuxième machine motrice.

De préférence, la troisième consigne de couple est déterminée par mesure lors de la simulation du cycle de conduite sur un banc d'essai destiné à l'évaluation du groupe motopropulseur démuni de la deuxième machine motrice, ou par calcul en fonction au moins d'un paramètre de vitesse du véhicule défini par le cycle de conduite.

Selon une variante, le procédé comporte en outre le pilotage de la consigne d'un moyen de régulation thermique du moyen de refroidissement de la première machine motrice en fonction d'un paramètre dudit cycle de conduite configuré de manière à être représentatif de l'action du flux d'air agissant en façade du véhicule lors du roulage du cycle de conduite.

L'invention permet de réduire de manière significative les coûts de conception et de fonctionnement d'un banc d'essai pour un groupe motopropulseur hybride d'environ 50% par rapport aux bancs d'essai existants. L'automatisation complète du banc d'essai permet de réduire les coûts d'exploitation, de garantir la reproductibilité des cycles de conduite et la comparaison des résultats où bien souvent les gains de consommation et de dépollution sont difficilement détectables. Indirectement, on réduit ainsi le nombre de cycles d'essai et par conséquent le coût d'exploitation et de conception d'un véhicule.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig.1] représente un exemple de cycle de conduite destiné à être simulé par le banc d'essai selon l'invention.
[Fig.2] représente schématiquement un banc d'essai de groupe motopropulseur hybride selon l'invention pour l'évaluation des performances du groupe motopropulseur lors de l'exécution d'un cycle de conduite.
[Fig.3] est un graphique représentant la cartographie de commande du couple moteur thermique en fonction d'une consigne virtuelle d'enfoncement d'une pédale d'accélérateur délivrée par le banc d'essai.

Le banc d'essai selon l'invention vise à simuler les performances d'un groupe motopropulseur de véhicule hybride en consommation de carburant, émission de gaz polluants et de gaz CO₂. A cet effet, le banc d'essai comporte des moyens de simulation de cycles de conduite et des moyens d'actionnement du groupe motopropulseur pour opérer ces cycles de conduites. Les cycles de conduite peuvent être des cycles de conduites normalisés selon les spécifications dictées par les autorités, par exemple dans les procédures européennes WLTP ou les procédures nord-américaines FTP. On n'écarte pas non plus la possibilité de simuler grâce au banc d'essai des cycles de conduite non normalisés issus de mesures effectuées en situation de roulage réelles.

Dans une variante, un cycle de conduite est défini par un paramètre de vitesse de véhicule et par une durée d'application de ce paramètre de vitesse. Un cycle de conduite comporte des phases d'accélération visant à simuler l'utilisation réelle d'un véhicule. Par exemple, la procédure définissant les cycles WLTP définit des cycles de conduite spécifiques pour des catégories de véhicule selon leur puissance de motorisation.

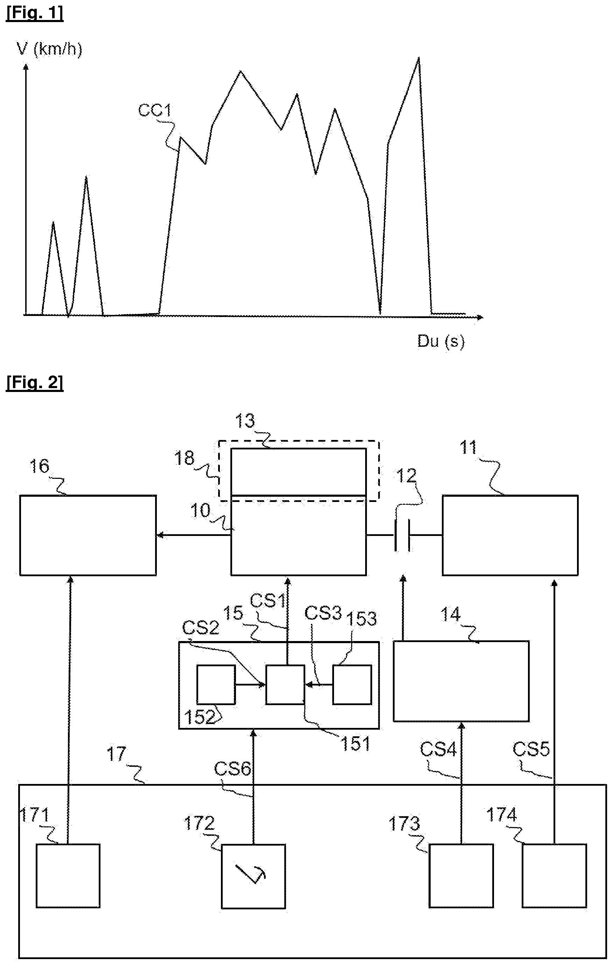

En figure 1, le graphique représente schématiquement un exemple de cycle de conduite CC1 destiné à être simulé par le banc d'essai. En abscisse on a représenté la durée du cycle DU en seconde et en ordonnée on a représenté la vitesse du véhicule à simuler, ici en km/h.

Le banc d'essai est judicieusement configuré pour nécessiter uniquement une seule des machines motrices du groupe motopropulseur lorsque celui-ci est prévu pour être équipé de deux machines motrices de traction. Dans une variante de réalisation, le banc d'essai comporte uniquement une partie seulement des machines motrices de traction du groupe motopropulseur lorsque celui-ci est prévu pour être équipé en tout de trois machines motrices de traction ou plus, par exemple un moteur thermique, une machine électrique avant attelée sur le train avant et une machine électrique arrière attelée sur le train arrière. Les moyens de pilotage du banc d'essai sont prévus pour être adaptés à tout type d'architecture de groupe motopropulseur hybride.

Plus précisément, lorsque le groupe motopropulseur comporte un moteur thermique et une machine électrique de traction, le banc d'essai comporte dans une première variante le moteur thermique seul et des moyens de pilotage permettant de simuler le fonctionnement de la machine électrique lors de l'exécution du cycle de conduite. Cette première variante vise à simuler les performances du moteur thermique. Dans une deuxième variante, le banc d'essai comporte la machine électrique de traction uniquement et le système de batterie ainsi que des moyens de pilotage permettant de simuler le fonctionnement du moteur thermique lors de l'exécution du cycle de conduite. Il est possible ainsi, à partir d'un banc d'essai existant pour un groupe motopropulseur non hybride, d'adapter à coût réduit son fonctionnement pour simuler le comportement du groupe motopropulseur hybride. Dans d'autres variantes, le banc d'essai comporte uniquement le moteur thermique et vise à simuler les performances d'un groupe motopropulseur comportant deux machines électriques de traction ou plus, par exemple un module de traction avant et arrière indépendant mécaniquement.

La figure 2 décrit une variante préférentielle du banc d'essai selon l'invention pour un groupe motopropulseur hybride de véhicule automobile comportant une première et une deuxième machine motrice destiné à la simulation d'un cycle de conduite. Lors d'un cycle de conduite, le groupe motopropulseur à évaluer est apte à déclencher un mode de roulage thermique, c'est-à-dire que le couple moteur total destiné à être transmis aux roues est généré par le moteur thermique uniquement, un mode de roulage hybride où le couple moteur total est généré par le moteur thermique et la machine électrique de traction et un mode de roulage dit électrique où le couple moteur total est généré par la machine électrique de traction uniquement.

Typiquement, les stratégies de déclenchement des modes de roulage thermique, hybride et électrique dépendent de paramètres internes de fonctionnement et de configuration du groupe motopropulseur, tels la vitesse du véhicule, le couple total demandé par la volonté du conducteur, l'état de charge et de sollicitation du système de batterie, un mode de roulage actif du groupe motopropulseur (économe, sportif, électrique, etc..). On notera que chaque constructeur implémente sa propre stratégie interne spécifique à son véhicule. A cet effet, le banc d'essai comporte notamment un module de calcul de la consigne de couple moteur à destination de la machine électrique. Dans le cadre de l'invention, du fait que le banc d'essai est démuni de la machine électrique de traction, cette consigne est désignée par le terme consigne virtuelle dans le sens où celle-ci n'est pas transmise à une machine électrique de traction et est exploitée à des fins de calcul de la consigne du moteur thermique pour prendre en compte l'action de la machine électrique de traction.

Plus précisément, le banc d'essai comporte un moteur thermique 10 dont les performances sont à évaluer par le banc d'essai, une génératrice 11, un dispositif d'accouplement 12, un actionneur pilotable 14 du dispositif d'accouplement 12, un moyen de refroidissement 13 du moteur thermique 10, un moyen de régulation thermique 18 du moyen de refroidissement, un moyen de pilotage 15 du moteur thermique 10, un moyen d'analyse 16 des gaz d'échappement et enfin un pupitre de contrôle 17 du banc d'essai émettant les requêtes de commande de chacun des équipements mentionnés précédemment.

La génératrice 11 comporte un arbre rotatif relié mécaniquement à l'arbre rotatif du moteur thermique 10 par l'intermédiaire du dispositif d'accouplement pilotable 12. La génératrice 11 a pour fonction de transmettre un couple résistant à l'arbre rotatif du moteur thermique 10 afin de simuler le couple de frottement et d'inertie qui s'applique au moteur thermique lors du roulage d'un cycle de conduite en fonction notamment de la vitesse du véhicule définie par le cycle de conduite. La génératrice 11 est pilotée par une consigne CS5 émise par le pupitre 17. La consigne CS5 est dans ce mode de réalisation une consigne de régime de rotation permettant d'appliquer le couple résistant lors de l'exécution du cycle de conduite.

Le dispositif d'accouplement 12 est prévu pour simuler à l'identique le comportement du dispositif d'accouplement réel prévu pour équiper le groupe motopropulseur du véhicule permettant la transmission et la rupture de couple entre les roues du véhicule et le moteur thermique 10, par exemple un dispositif d'embrayage humide ou sec, convertisseur de couple, ou bien encore un crabot. Le dispositif d'accouplement 12 est piloté par un actionneur 14 en fonction d'une consigne CS4 délivrée par le pupitre 17 pilotant un état d'ouverture et de fermeture selon l'état de fonctionnement simulé du groupe motopropulseur. L'ensemble formé par le dispositif d'accouplement 12 et l'actionneur 14 permet de simuler les fonctions du contrôle moteur et d'une boite de vitesses automatisée pour l'ensemble des stratégies automatisées de contrôle de couplage et de contrôle de démarrage et arrêt du moteur.

Ces fonctions ont aujourd'hui un rôle essentiel pour la réduction de la consommation de carburant et gaz polluant d'un groupe motopropulseur hybride et il est donc primordial de pouvoir les simuler par le banc d'essai lors de l'exécution d'un cycle de conduite. Par exemple, lorsque le groupe motopropulseur est piloté pour transmettre un couple moteur de l'arbre rotatif du moteur thermique 10 vers les roues, le dispositif d'accouplement 12 est piloté en état de fermeture, tandis qu'en phase de ralenti ou d'arrêt momentané du moteur découlant d'une stratégie d'économisation de carburant, le dispositif d'accouplement 12 est piloté en état d'ouverture pour interrompre la chaine de transmission de couple entre la génératrice 11 et le moteur thermique 10.

Par ailleurs, le moteur thermique 10 est équipé de façon connue en soi à l'instar d'un groupe motopropulseur de véhicule automobile, d'un radiateur de refroidissement 13. De plus, le banc d'essai comporte un moyen de régulation thermique 18 pilotable en fonction d'un paramètre dudit cycle de conduite configuré de manière à être représentatif de l'action du flux d'air agissant en façade du véhicule lors du roulage du cycle de conduite.

Selon un mode de réalisation, le moyen de régulation thermique 18 est un caisson étanche dans lequel est logé le radiateur 13 et comporte des moyens d'échange thermique entre un fluide de régulation thermique et la surface du radiateur, le débit du fluide étant piloté par le banc d'essai.

Le moyen d'échange thermique logé dans le caisson étanche est un dispositif de projection du fluide, de type pissette de projection, apte à projeter le fluide sur la surface du radiateur 13. Le ou les jets de fluide permettent ainsi de faire varier la température du radiateur similairement à un flux d'air agissant en façade du véhicule en fonction du débit commandé. La température peut varier en refroidissement ou en chauffage.

Le radiateur 13 est logé également à l'intérieur du caisson. Le caisson présente l'avantage d'améliorer la collecte du fluide et la précision de la régulation en température. Par ailleurs, le caisson étanche forme une enveloppe mécanique fermée similaire à la caisse du véhicule où est logée le radiateur du moteur thermique. On améliore ainsi la simulation du flux d'air agissant en façade du véhicule.

Le moyen de régulation thermique 18 est pilotable par une consigne dépendant dudit paramètre du cycle de conduite dont la valeur est dépendante de la valeur du paramètre de vitesse du cycle de conduite, ou dans une variante peut être un paramètre calibré par une commande du pupitre. Le débit de régulation du fluide peut être constant ou variable durant un cycle de conduite.

De plus, l'unité de commande 15 du moteur thermique 10 opère les fonctions de pilotage mises en oeuvre par un groupe motopropulseur hybride de véhicule. L'unité de commande 15 est un calculateur à circuit intégré comprenant des mémoires sur lesquelles sont enregistrées les fonctions de pilotage du moteur thermique 10.

L'unité de commande 15 comporte un module de calcul 151 de la consigne de couple moteur CS1 à destination du moteur thermique 10 pour répondre à la consigne de volonté du conducteur découlant de la position d'une pédale d'accélérateur. La consigne CS1 dépend des stratégies énergétiques du groupe motopropulseur hybride et par conséquent dépend de la valeur d'une consigne CS2 de la machine électrique.

Par conséquent, dans le cadre de l'invention, l'unité de commande 15 du banc d'essai comporte également un module de calcul 152 de la consigne de couple virtuelle CS2 à destination de la machine électrique, bien que le banc d'essai ne soit pas équipé de la machine électrique de traction. Le module de calcul de la consigne virtuelle CS2 permet d'estimer le couple de la machine électrique qui serait mis en oeuvre par le groupe motopropulseur hybride lorsqu'un cycle de conduite est exécuté. Le module de calcul 152 est configuré par les fonctions d'activation de la machine électrique pour le fonctionnement du groupe motopropulseur hybride. Ces fonctions sont propres à chaque constructeur et pilotent la machine électrique de traction pour fournir un couple positif ou négatif, par exemple un couple moteur aux roues (en assistance au moteur thermique ou seul), un couple résistif pour recharger le système de batterie ou bien encore un couple résistif pour alimenter un équipement électrique du véhicule.

De plus, l'unité de commande 15 comporte un module de calcul 153 d'une troisième consigne de couple virtuelle CS3 calculée pour être délivrée au moteur thermique 10 pour un même modèle du véhicule comportant un groupe motopropulseur conventionnel thermique, c'est-à-dire démuni de la deuxième machine motrice. La valeur de la consigne virtuelle CS3 lors de l'exécution du cycle de conduite est connue par mesure sur un banc d'essai existant du groupe motopropulseur dans sa version thermique conventionnelle lors de la commande du cycle de conduite normalisé, ou bien par collecte des données du groupe motopropulseur en condition réelle de roulage d'un cycle de conduite d'essai. On ajoutera que la consigne CS3 du couple moteur à transmettre aux roues est égale à la consigne de couple total à transmettre aux roues du fait que le groupe motopropulseur conventionnel n'est équipé que du moteur thermique.

Ainsi, par une adaptation logicielle de l'unité de commande du moteur thermique d'un banc d'essai existant d'une version conventionnelle en motorisation thermique seule, il est possible de mettre en oeuvre un banc d'essai pour une version hybride du groupe motopropulseur en calculant la consigne de couple du moteur thermique CS1 en fonction de la consigne virtuelle CS3. L'invention permet ainsi de réduire le cout de développement d'un banc d'essai. Par ailleurs, un avantage de l'invention est de pouvoir simuler différentes stratégies d'activation de la machine électrique en modifiant les configurations logicielles de pilotage pour évaluer l'impact sur les performances du moteur thermique.

Plus précisément, la valeur de la consigne CS1 est calculée selon la relation suivante : C1 = C3 - C2, où C1 est la valeur en couple de la première consigne CS1, C3 est la valeur en couple de la troisième consigne virtuelle CS3 et C2 est la valeur en couple de la deuxième consigne virtuelle CS2. On prend l'hypothèse que les différences de masse et de moment d'inertie et frottement entre une version hybride du groupe motopropulseur et une version thermique conventionnelle sont négligeables pour certaines situations de roulage. Ainsi, pour une même silhouette aérodynamique de véhicule, on considère que le calcul de la consigne CS1 est valable pour l'évaluation des performances du véhicule lors de la simulation d'un cycle de conduite.

De plus, le banc d'essai comporte des moyens d'analyse 16 des gaz d'échappement émis par le moteur thermique 10. Plus précisément, les moyens d'analyse sont une baie d'analyse permettant d'estimer la concentration des particules de combustion et des molécules de CO₂.

Le pupitre de pilotage 17 comporte des modules 171, 172, 173, 174 pour l'opération des cycles de conduite lors d'une évaluation du groupe motopropulseur hybride. Le module d'analyse des gaz d'échappement 171 délivre les requêtes de mesure à la baie d'analyse 16. Le module 172 délivre des consignes CS6 à destination de l'unité de commande 15 du moteur thermique 10. Parmi les consignes CS6, le pupitre 17 délivre une consigne de position virtuelle de pédale d'accélérateur, les données relatives au paramètre de vitesse du véhicule pour exécuter le cycle de conduite, les requêtes en couple de la boite de vitesses automatisée à destination du moteur thermique 10. Le module 173 délivre les requêtes CS4 d'ouverture et fermeture du dispositif d'accouplement 12. Les requêtes CS4 sont des consignes de position de l'actionneur piloté en fonction d'un paramètre d'état d'ouverture ou fermeture, ou un paramètre de couple à transmettre. Enfin le module 174 délivre les consignes CS5 de régime vers la génératrice 11.

Par ailleurs, afin de simplifier la commande de la consigne CS1 pilotée par la consigne de pédale d'accélérateur, le module 151 du moyen de pilotage 15 du moteur thermique est judicieusement adapté pour mettre en oeuvre une cartographie prédéterminée définissant une fonction linéaire délivrant la première consigne de couple CS1 en fonction de la consigne de position virtuelle reçue du pupitre 17 représentative d'un enfoncement de la pédale d'accélérateur du véhicule.

La modification de la cartographie facilite l'opération du banc d'essai lors de l'exécution d'un cycle de conduite. En effet, grâce à la cartographie, la coordination du pilotage de la consigne virtuelle d'enfoncement pédale et de la consigne de régime de la génératrice est simplifiée et facilite la mise en opération du cycle de conduite qui définit la vitesse véhicule à simuler. Le phasage entre la consigne CS5 de la génératrice 11 et la consigne virtuelle de pédale à destination du moyen de pilotage 15 du moteur thermique 10 est assuré par un fichier de pilotage unique.

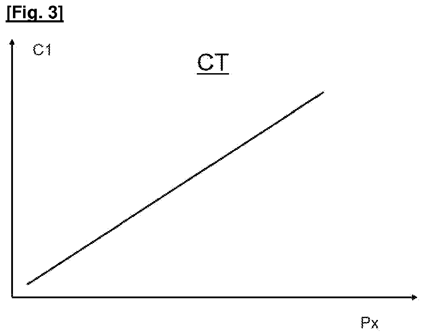

En figure 3, on a représenté la cartographie prédéterminée mise en oeuvre par le moyen de pilotage du moteur pour le contrôle de la consigne de couple CS1 en fonction de l'enfoncement de la pédale. En abscisse Px représente le pourcentage d'enfoncement de la pédale d'accélérateur et en ordonnée C1 est la valeur du couple de la consigne CS1 qui en résulte. Cette cartographie se différencie d'une cartographie conventionnelle en ce que la valeur C1 est indépendante de la valeur instantanée du régime du moteur thermique.

L'invention concerne également le procédé de pilotage du banc d'essai. Le procédé consiste à piloter la première machine motrice 10 équipant le banc d'essai en fonction de la première consigne de couple CS1 qui est dépendante d'une deuxième consigne de couple virtuelle CS2 de la deuxième machine motrice et d'une troisième consigne de couple virtuelle CS3 de la première machine motrice 10 calculée pour un modèle du véhicule comportant un groupe motopropulseur démuni de la deuxième machine motrice.

La consigne virtuelle CS3 utilisée lors du pilotage du banc d'essai a été déterminée par mesure lors de la simulation du cycle de conduite sur un banc d'essai existant lequel destiné à l'évaluation du groupe motopropulseur démuni de la deuxième machine motrice. On réduit ainsi le coût de mis en essai d'un groupe motopropulseur hybride grâce aux mesures déjà réalisées pour une version conventionnelle thermique. Dans une variante, la consigne CS3 est déterminée par calcul en fonction au moins d'un paramètre de vitesse du véhicule défini par le cycle de conduite et en fonction des caractéristiques intrinsèques au véhicule (frottement, moment d'inertie, silhouette aérodynamique).

On décrit maintenant le déroulement d'un cycle de conduite sur le banc d'essai. La génératrice est régulée selon la consigne de régime de rotation par le pupitre à partir des acquisitions de données réalisées lors de l'exécution du cycle sur un banc d'essai existant simulant le fonctionnement d'un groupe motopropulseur conventionnel.

De manière synchronisée avec la consigne de régime de la génératrice, le pupitre délivre une consigne virtuelle de position de la pédale d'accélérateur au moyen de pilotage du moteur thermique grâce au fichier de pilotage unique du cycle de conduite.

Lors des phases de ralenti, d'arrêt et redémarrage du moteur thermique, pouvant découler des stratégies énergétiques hybrides du groupe motopropulseur, l'actionneur du dispositif d'accouplement est piloté en état d'ouverture pour interrompre la transmission de couple.

Par ailleurs, les mesures de la baie d'analyse et du compteur de particules sont déclenchées par le pupitre de sorte à être effectives entre le début et la fin d'un cycle de conduite.

On a décrit le banc d'essai et son procédé de pilotage pour l'évaluation et la calibration d'un moteur thermique de groupe motopropulseur. Il est bien entendu que le banc d'essai ainsi que son procédé de pilotage associé peuvent être mis en oeuvre pour l'évaluation d'une machine électrique et son système de batterie sans la nécessité d'intégrer les équipements associés au moteur thermique. La consigne CS1 est alors à destination d'une machine électrique du banc d'essai, la consigne CS2 virtuelle d'un moteur thermique et la consigne CS3 est alors la consigne virtuelle d'une machine électrique pour un groupe motopropulseur électrique.

## Revendications

1. Banc d'essai pour un groupe motopropulseur hybride de véhicule automobile comportant une première et une deuxième machine motrice destiné à la simulation d'un cycle de conduite, tel qu'il comporte uniquement la première machine motrice (10) desdites première et deuxième machines motrices et des moyens de pilotage comportant un moyen de détermination (15) d'une première consigne de couple (CS1) de la première machine motrice (10) équipant le banc d'essai, ladite première consigne (CS1) étant calculée en fonction d'une deuxième consigne de couple virtuelle (CS2) de la deuxième machine motrice et d'une troisième consigne de couple virtuelle (CS3) de la première machine motrice (10), **caractérisé en ce que** ladite troisième consigne (CS3) étant calculée pour un modèle du véhicule comportant un groupe motopropulseur démuni de la deuxième machine motrice pour l'exécution dudit cycle de conduite, la première machine motrice (10) pilotée par la première consigne (CS1) étant un moteur thermique et **en ce qu'**il comporte en outre un moyen d'analyse (16) des gaz d'échappement dudit moteur thermique (10).

2. Banc d'essai selon la revendication 1, **caractérisé en ce que** la première consigne de couple (CS1) est calculée selon la relation suivante : C1= C3 - C2, où C1 est la valeur en couple de la première consigne (CS1), C3 est la valeur en couple de la troisième consigne virtuelle (CS3) et C2 est la valeur en couple de la deuxième consigne virtuelle (CS2).

3. Banc d'essai selon la revendication 1 ou 2, **caractérisé en ce qu'**il comporte en outre une génératrice (11), un moyen d'accouplement d'arbre rotatif (12) et un actionneur (14) pilotable de manière à accoupler sélectivement ladite machine motrice (10) à la génératrice (11) en fonction d'une quatrième consigne (CS4) d'un couple transmissible.

4. Banc d'essai selon l'une quelconque des revendications 1 à 3, **caractérisé en ce que** le moyen de détermination (15) de la première consigne de couple (CS1) met en oeuvre une cartographie prédéterminée (CT) définissant une fonction linéaire délivrant la première consigne de couple (CS1) en fonction d'une consigne de position (CS6) représentative d'un enfoncement d'une pédale d'accélérateur du véhicule.

5. Banc d'essai selon l'une des revendications précédentes, **caractérisé en ce qu'**il comporte en outre un moyen de refroidissement (13) du moteur thermique (10) et un moyen de régulation thermique (18) du moyen de refroidissement (13) pilotable en fonction d'un paramètre dudit cycle de conduite configuré de manière à être représentatif de l'action du flux d'air agissant en façade du véhicule lors du roulage du cycle de conduite.

6. Procédé de pilotage d'un banc d'essai selon la revendication 5, **caractérisé en ce qu'**il consiste à piloter la première machine motrice (10) équipant le banc d'essai en fonction de la première consigne de couple (CS1) qui est dépendante d'une deuxième consigne de couple virtuelle (CS2) de la deuxième machine motrice et d'une troisième consigne de couple virtuelle (CS3) de la première machine motrice (10) calculée pour un modèle du véhicule comportant un groupe motopropulseur démuni de la deuxième machine motrice.

7. Procédé selon la revendication 6, **caractérisé en ce que** la troisième consigne de couple (CS3) est déterminée par mesure lors de la simulation du cycle de conduite sur un banc d'essai destiné à l'évaluation du groupe motopropulseur démuni de la deuxième machine motrice, ou par calcul en fonction au moins d'un paramètre de vitesse du véhicule défini par le cycle de conduite.

8. Procédé selon la revendication 6 ou 7, le banc d'essai selon étant conforme à la revendication 6, **caractérisé en ce qu'**il comporte en outre le pilotage de la consigne d'un moyen de régulation thermique (18) du moyen de refroidissement (13) de la première machine motrice (10) en fonction d'un paramètre dudit cycle de conduite configuré de manière à être représentatif de l'action du flux d'air agissant en façade du véhicule lors du roulage du cycle de conduite.

## Patentansprüche

1. Prüfstand für einen Hybridantriebsstrang eines Fahrzeugs Kraftfahrzeug, umfassend eine erste und eine zweite Antriebsmaschine, die für die Simulation eines Fahrzyklus bestimmt sind, so dass es nur die erste Antriebsmaschine (10) der ersten und zweiten Antriebsmaschinen und Steuermittel umfasst, die ein Bestimmungsmittel (15) umfassen, a erster Drehmomentsollwert (CS1) der den Prüfstand ausrüstenden ersten Antriebsmaschine (10), wobei der erste Sollwert (CS1) in Abhängigkeit eines zweiten virtuellen Drehmomentsollwerts (CS2) der zweiten Antriebsmaschine und eines dritten virtuellen Drehmomentsollwerts berechnet wird (CS3) der ersten Antriebsmaschine (10), **dadurch gekennzeichnet, dass** der dritte Sollwert (CS3) für ein Modell des Fahrzeugs berechnet wird, das einen Antriebsstrang umfasst, dem der Motor der zweiten Antriebsmaschine für die Ausführung des Fahrzyklus fehlt, der erste Motor der Maschine (10), gesteuert durch die erste Anweisung (CS1), eine Wärmekraftmaschine ist und dass sie außerdem ein Mittel zur Analyse (16) der von der Wärmekraftmaschine (10) austretenden Abgase umfasst.

2. Prüfstand nach Anspruch 1, **dadurch gekennzeichnet, dass** der erste Der Drehmomentsollwert (CS1) wird gemäß der folgenden Beziehung berechnet: C1 = C3 - C2, wobei Cl der Drehmomentwert des ersten Sollwerts (CS1), C3 der Drehmomentwert des dritten virtuellen Sollwerts (CS3) und C2 der ist Drehmomentwert des zweiten virtuellen Sollwerts (CS2).

3. Prüfstand nach Anspruch 1 oder 2, **dadurch gekennzeichnet, dass** er umfasst ferner einen Generator (11), ein Drehwellenkopplungsmittel (12) und einen Aktuator (14), der so steuerbar ist, dass er die Antriebsmaschine (10) gemäß einem vierten Sollwert (CS4) von a selektiv mit dem Generator (11) koppelt übertragbares Drehmoment.

4. Prüfstand nach einem der Ansprüche 1 bis 3, **dadurch gekennzeichnet, dass** die Mittel (15) zur Bestimmung des ersten Drehmomentsollwerts (CS1) ein vorgegebenes Kennfeld (CT) implementieren, das eine lineare Funktion definiert, die den ersten Drehmomentsollwert (CS1) als a liefert Funktion eines Positionssollwerts (CS6), der das Niederdrücken eines Gaspedals des Fahrzeugs darstellt.

5. Prüfstand nach einem der vorhergehenden Ansprüche, **dadurch gekennzeichnet, dass** er weiterhin eine Kühleinrichtung (13) für die Wärmekraftmaschine (10) und eine thermische Regelungseinrichtung (18) für die Kühleinrichtung (13) umfasst, die in Abhängigkeit von a steuerbar ist Parameter des Fahrzyklus, der so konfiguriert ist, dass er die Wirkung des Luftstroms darstellt, der während des Rollens des Fahrzyklus auf die Vorderseite des Fahrzeugs wirkt.

6. Verfahren zur Steuerung eines Prüfstands nach Anspruch 5, **dadurch gekennzeichnet, dass** es darin besteht, die erste Antriebsmaschine (10), mit der der Prüfstand ausgestattet ist, in Abhängigkeit vom ersten Drehmomentsollwert (CS1) zu steuern, der von einem zweiten virtuellen Drehmomentsollwert abhängt ( CS2) der zweiten Antriebsmaschine und auf einem dritten virtuellen Drehmomentsollwert (CS3) der ersten Antriebsmaschine (10), berechnet für ein Modell des Fahrzeugs mit einem Antriebsstrang ohne zweite Antriebsmaschine.

7. Verfahren nach Anspruch 6, **dadurch gekennzeichnet, dass** der dritte Der Drehmomentsollwert (CS3) wird durch Messung während der Simulation des Fahrzyklus auf einem Prüfstand zur Bewertung des Antriebsstrangs ohne die zweite Antriebsmaschine oder durch Berechnung in Abhängigkeit von mindestens einem durch den Fahrbetrieb vorgegebenen Parameter Fahrzeuggeschwindigkeit ermittelt Zyklus.

8. Verfahren nach Anspruch 6 oder 7, der Prüfstand gemäß nach Anspruch 6, **dadurch gekennzeichnet, dass** es außerdem die Steuerung des Sollwerts eines thermischen Regulierungsmittels (18) des Kühlmittels (13) der ersten Antriebsmaschine (10) in Abhängigkeit von einem Parameter des konfigurierten Antriebszyklus umfasst um repräsentativ für die Wirkung des Luftstroms zu sein, der während des Fahrzyklus auf die Vorderseite des Fahrzeugs wirkt.

## Claims

1. Test bench for a vehicle hybrid powertrain motor vehicle comprising a first and a second driving machine intended for the simulation of a driving cycle, such that it only comprises the first driving machine (10) of the said first and second driving machines and control means comprising a determination means (15) a first torque setpoint (CS1) of the first driving machine (10) equipping the test bench, said first setpoint (CS1) being calculated as a function of a second virtual torque setpoint (CS2) of the second driving machine and a third virtual torque setpoint (CS3) of the first driving machine (10), **characterized in that** said third setpoint (CS3) being calculated for a model of the vehicle comprising a powertrain lacking the second driving machine motor for the execution of said driving cycle, the first motor machine (10) controlled by the first instruction (CS1) being a heat engine and **in that** it further comprises a means of analysis (16) of the exhaust gases exhaust from said heat engine (10).

2. Test bench according to Claim 1, **characterized in that** the first torque setpoint (CS1) is calculated according to the following relationship: C1= C3 - C2, where Cl is the torque value of the first setpoint (CS1), C3 is the torque value of the third virtual setpoint (CS3) and C2 is the torque value of the second virtual setpoint (CS2).

3. Test bench according to Claim 1 or 2, **characterized in that** it further comprises a generator (11), a rotating shaft coupling means (12) and an actuator (14) controllable so as to selectively couple said prime mover (10) to the generator (11) according to a fourth setpoint (CS4) of a transmissible torque.

4. Test bench according to any one of Claims 1 to 3, **characterized in that** the means (15) for determining the first torque setpoint (CS1) implements a predetermined map (CT) defining a linear function delivering the first torque setpoint (CS1) as a function of a position setpoint (CS6) representative of depression of an accelerator pedal of the vehicle.

5. Test bench according to one of the preceding claims, **characterized in that** it further comprises a cooling means (13) for the thermal engine (10) and a thermal regulation means (18) for the cooling means (13) controllable as a function of a parameter of said driving cycle configured so as to be representative of the action of the air flow acting on the front of the vehicle during rolling of the driving cycle.

6. Method for controlling a test bench according to claim 5, **characterized in that** it consists in controlling the first driving machine (10) equipping the test bench as a function of the first torque setpoint (CS1) which is dependent on a second virtual torque setpoint (CS2) of the second driving machine and on a third virtual torque setpoint (CS3) of the first driving machine (10) calculated for a model of the vehicle comprising a powertrain lacking the second prime mover.

7. Process according to Claim 6, **characterized in that** the third torque setpoint (CS3) is determined by measurement during the simulation of the driving cycle on a test bench intended for the evaluation of the powertrain without the second driving machine, or by calculation as a function of at least one vehicle speed parameter defined by the driving cycle.

8. Method according to claim 6 or 7, the test bench according to being according to claim 6, **characterized in that** it further comprises the control of the setpoint of a thermal regulation means (18) of the cooling means (13) of the first prime mover (10) as a function of a parameter of said driving cycle configured so as to be representative of the action of the air flow acting on the front of the vehicle during rolling of the driving cycle.
